# EUROPÄISCHE PATENTANMELDUNG

(11) **EP 0 995 663 A2**
(43) Veröffentlichungstag der Anmeldung: **26.04.2000**
(21) Anmeldenummer: 99120323.3
(22) Anmeldetag: 12.10.1999
(51) Int. Cl.: B62D 1/18

(54) **Flurförderzeug mit einer Lenkvorrichtung**

(30) Priorität: 19.10.1998 DE 19847933; 19.08.1999 DE 19939293
(71) Anmelder: STILL GMBH, D-22113 Hamburg (DE)
(72) Erfinder: Logemann, Ulf, Dipl.-Ing., 21447 Handorf (DE); Bromberg, Thorald, Dipl.-Ing., 22946 Trittau (DE); Neuf, Ottmar, Dipl.-Ing., 21465 Reinbek (DE)
(74) Vertreter: Kasseckert, Rainer

(57) **Zusammenfassung**

Gegenstand der Erfindung ist ein Flurförderzeug mit einer Lenkvorrichtung, wobei ein Lenkrad (1) mittels einer bewegbaren Befestigungsvorrichtung höhenverstellbar angeordnet ist. Erfindungsgemäß ist die Befestigungsvorrichtung derart ausgeführt, daß ein Neigungswinkel des Lenkrads (1) relativ zur Waagrechten während eines Höhenverstellens des Lenkrads (1) zumindest annähernd unverändert bleibt. Die Befestigungsvorrichtung weist vorzugsweise eine Parallelogrammführung (6) auf.

## Beschreibung

Die Erfindung betrifft ein Flurförderzeug mit einer Lenkvorrichtung, wobei ein Lenkrad mittels einer bewegbaren Befestigungsvorrichtung höhenverstellbar angeordnet ist. Die Erfindung betrifft ebenfalls ein Flurförderzeug mit einer Lenkvorrichtung und einem drehbaren, z.B. an einer im wesentlichen vertikalen Säule befestigten Fahrersitz.

Um den Fahrerplatz eines Flurförderzeugs ergonomisch vorteilhaft zu gestalten, ist es besonders wichtig, die verschiedenen Bedienelemente in einer für den Fahrer günstigen Position anzuordnen. Insbesondere das Lenkrad, auf welches der Fahrer praktisch während der gesamten Arbeitszeit zugreifen muß, sollte sich stets in der für den jeweiligen Fahrer und die jeweilige Arbeitssituation optimalen Stellung befinden. Aus diesem Grund ist es bekannt, das Lenkrad eines Flurförderzeugs höhenverstellbar auszuführen.

Bei den in Flurförderzeugen bekannten höhenverstellbaren Lenkrädern kann das Lenkrad um eine horizontale Achse geschwenkt werden. Hierbei tritt bei der Höhenverstellung des Lenkrads eine erhebliche Neigungsveränderung ein, wodurch eine ergonomisch günstige Stellung des Lenkrads nicht immer gewährleistet ist.

Besonders schwierig gestaltet sich die Anordnung des Lenkrads bei Flurförderzeugen mit einem drehbaren Fahrersitz. Hierbei sind Lösungen bekannt, bei denen das Lenkrad ortsfest in der Fahrerkabine angeordnet ist. Bekannt ist es ebenfalls, das Lenkrad mit dem Fahrersitz mitzuschwenken. Eine individuelle Einstellbarkeit der Position des Lenkrads relativ zum Fahrersitz ist bei diesen Lösungen in der Regel nicht vorgesehen.

Der vorliegenden Erfindung liegt die Aufgabe zugrunde, ein Flurförderzeug mit einer Lenkvorrichtung zur Verfügung zu stellen, bei dem eine ergonomische günstige Position des Lenkrads in möglichst allen Betriebssituationen einstellbar ist.

Diese Aufgabe wird bezüglich des Flurförderzeugs mit höhenverstellbarem Lenkrad dadurch gelöst, daß die Befestigungsvorrichtung derart ausgeführt ist, daß ein Neigungswinkel des Lenkrads relativ zur Waagrechten während eines Höhenverstellens des Lenkrads zumindest annähernd unverändert bleibt. Der Neigungswinkel des Lenkrads bleibt somit konstant und kann bereits bei der Herstellung des Flurförderzeugs optimal eingestellt werden.

Eine besonders günstige Ausführungsform besteht darin, daß die Befestigungsvorrichtung eine Parallelogrammführung oder Linearführung aufweist. Bei einer Höhenverstellung des Lenkrads wird die Parallelogrammführung in sich verschoben. Eine Linearführung kann beispielsweise als Schwalbenschwanzführung oder als Linearlager ausgeführt sein.

Die Befestigungsvorrichtung weist ein Mittel zum Arretieren der Höheneinstellung des Lenkrads auf. Ein unbeabsichtigtes Verstellen der Höhe des Lenkrads ist somit ausgeschlossen.

Mit besonderem Vorteil ist ein hydraulisches Lenkventil vorgesehen, das gemeinsam mit dem Lenkrad an der Befestigungsvorrichtung höhenverstellbar angeordnet ist. Das Lenkventil ist dabei direkt mit einer Lenkwelle des Lenkrads verbunden. Als Verbindung zwischen dem Lenkventil und einem Fahrzeugrahmen des Flurförderzeugs sind ausschließlich flexible hydraulische und elektrische Leitungen vorgesehen.

Gemäß einer möglichen Ausgestaltung der Erfindung ist im Bereich der Parallelogrammführung oder Linearführung eine Gasfeder angeordnet, die der Gewichtskraft des Lenkrads entgegenwirkt. Die Kraft der Gasfeder ist dabei so ausgelegt, daß sie die Gewichtskraft des Lenkrads und der damit verbundenen Bauteile kompensiert. Eine Höhenverstellung des Lenkrads ist somit durch die Bedienperson mit geringem Kraftaufwand möglich.

Gemäß einer zweckmäßigen Weiterbildung der Erfindung weist die Befestigungsvorrichtung eine im wesentlichen vertikal angeordnete Säule auf, wobei das Lenkrad schwenkbar um die vertikale Säule angeordnet ist. Zusätzlich zur erfindungsgemäßen Höhenverstellung kann das Lenkrad hiermit um die vertikale Säule in horizontaler Richtung geschwenkt werden.

Das Lenkrad ist gemeinsam mit der Parallelogrammführung oder Linearführung schwenkbar um die vertikale Säule angeordnet.

Eine besonders günstige Anordnung besteht darin, daß ein Fahrersitz drehbar um die selbe vertikale Säule angeordnet ist.

Die eingangs gestellte Aufgabe wird ebenfalls dadurch gelöst, daß die Befestigungsvorrichtung zwei voneinander in vertikaler Richtung beabstandete Hebel aufweist, die jeweils mit einem Ende an einem nicht höhenbeweglichen Teil der Lenkvorrichtung gelenkig gelagert sind und jeweils an dem anderen Ende ein mit dem Lenkrad verbundenes Bauteil gelenkig befestigt ist, wobei die Hebel eine unterschiedliche Länge aufweisen. Bei dieser Anordnung wird das Lenkrad bei einer Höhenverstellung automatisch geneigt. Der jeweilige Neigungswinkel ist hierbei durch die Längen der verschiedenen Hebel definiert.

Vorteilhafterweise ist der untere Hebel länger als der obere Hebel. Diese Maßnahme bewirkt, daß während eines Anhebens des Lenkrads das Lenkrad zum Fahrer hin geneigt wird.

Hierbei ist es vorteilhaft, wenn die Hebel parallel zur Körpermittelebene eines Fahrers ausgerichtet sind. Bei dieser Anordnung erfolgt keine Neigung des Lenkrads aus Sicht des Fahrers in seitlicher Richtung. Bei der Definition der Körpermittelebene wird von einer normalen Sitzposition des Fahrers auf dem Fahrersitz ausgegangen.

Weitere Ausgestaltungen ergeben sich hinsichtlich der Befestigung der Lenkvorrichtung analog zu der oben beschriebenen Ausführungsform mit Parallelogrammführung.

Die gestellte Aufgabe wird bezüglich des eingangs genannten Flurförderzeugs mit drehbarem Fahrersitz dadurch gelöst, daß das Lenkrad mittels eines Verbindungselements an der vertikalen Säule befestigt ist, wobei die Lenkvorrichtung um die vertikale Säule drehbar ist. Fahrersitz und Lenkrad sind also an der selben vertikalen Säule befestigt, die ihrerseits an einem Fahrzeugrahmen des Flurförderzeugs drehbar gelagert ist.

Wenn das Lenkrad unabhängig von dem Fahrersitz um die vertikale Säule drehbar ist, kann das Lenkrad relativ zum Fahrersitz in horizontaler Richtung verschwenkt werden.

Zusätzliche Vorteile ergeben sich, wenn das Lenkrad, bezüglich der Drehbarkeit um die vertikale Säule, relativ zu dem Fahrersitz drehfest arretierbar ist. Wenn die Arretierung betätigt ist, bewegt sich das Lenkrad bei einem Drehen des Fahrersitzes mit diesem mit. Die Position des Lenkrads relativ zum Fahrersitz wird hierbei also nicht verändert.

Gemäß einer zweckmäßigen Ausgestaltung der Erfindung weist das Verbindungselement mindestens ein Rohr auf. Dieses Rohr verbindet also das Lenkrad mit der vertikalen Säule.

Vorteilhafterweise sind in dem Rohr hydraulische und/oder elektrische Leitungen der Lenkvorrichtung angeordnet. Die Leitungen befinden sich somit geschützt innerhalb des Rohrs und verlaufen im Inneren der Säule weiter zu dem Fahrzeugrahmen des Flurförderzeugs.

Eine weitere Lösung der eingangs gestellten Aufgabe besteht darin, daß die Lenkvorrichtung direkt oder indirekt mit dem Fahrersitz verbunden und daß zur Aufnahme von hydraulischen und/oder elektrischen Leitungen der Lenkvorrichtung ein flexibler Schlauch vorgesehen ist. Bei dieser Anordnung wird die Lenkvorrichtung durch ein am Sitz befestigtes Bauteil getragen. Die flexiblen hydraulischen und elektrischen Leitungen, die von einem Rahmen des Flurförderzeugs in den Bereich des Lenkrads geführt sind, befinden sich in einem flexiblen Schlauch. Bei einem Drehen des Fahrersitzes paßt sich der flexible Schlauch an die veränderten geometrischen Verhältnisse am Fahrerplatz des Flurförderzeugs an. Im Vergleich zu einer Anordnung der Leitungen in einem starren Rohr wird ein größerer Drehwinkel des Fahrersitzes ermöglicht.

Ein besonders einfacher Aufbau ergibt sich, wenn die Lenkvorrichtung direkt oder indirekt an einer Sitzplatte des Fahrersitzes befestigt ist. Die Unterseite der Sitzplatte ist mit einer drehbaren Säule verbunden. An der Oberseite der Sitzplatte sind Schienen befestigt, an denen der Sitz längsverschieblich gelagert ist.

Weitere Vorteile ergeben sich, wenn der Fahrersitz an einer drehbaren, im wesentlichen vertikalen Säule befestigt ist.

Der flexible Schlauch verbindet die Lenkvorrichtung mit dieser Säule.

Weitere Vorteile und Einzelheiten der Erfindung werden anhand des in den schematischen Figuren dargestellten Ausführungsbeispiels näher erläutert. Dabei zeigt
- Figur 1: eine erfindungsgemäße Befestigungsvorrichtung in Seitenansicht,
- Figur 2: eine Parallelogrammführung in Seitenansicht,
- Figur 3: eine Parallelogrammführung in Draufsicht,
- Figur 4: eine Befestigungsvorrichtung mit zwei voneinander beabstandeten Hebeln unterschiedlicher Länge,
- Figur 5: eine Anordnung der Lenkungsvorrichtung in Verbindung mit einem schwenkbarem Fahrersitz,
- Figur 6: eine Anordnung der hydraulischen Leitungen in einem flexiblen Schlauch.

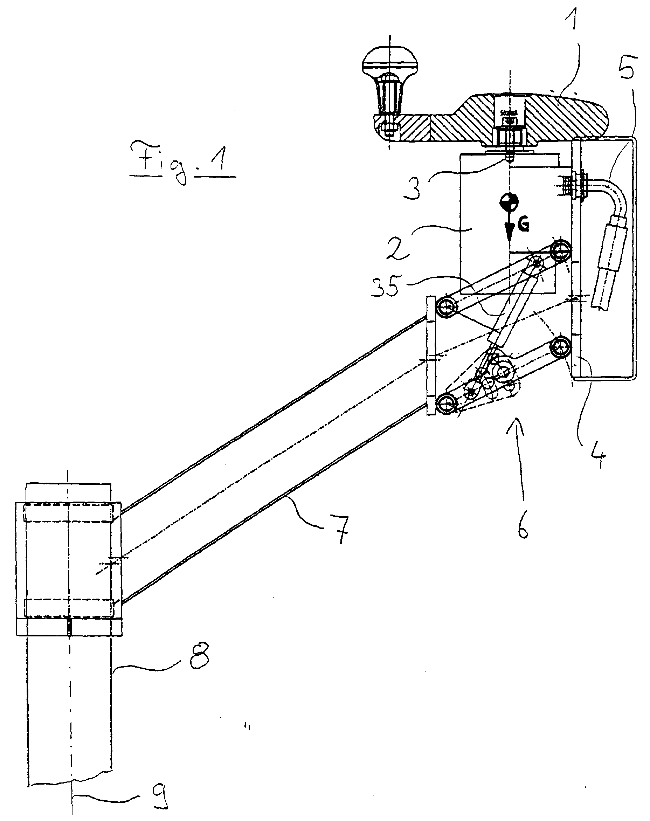

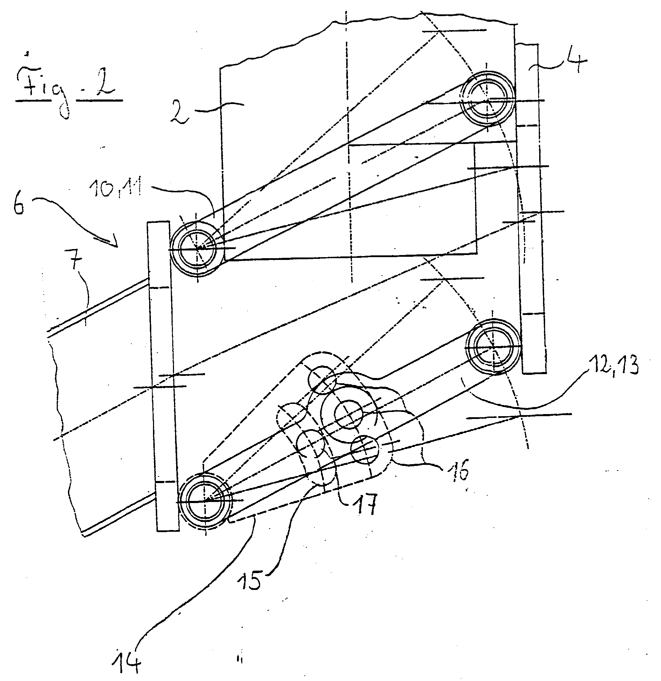

Figur 1 zeigt eine erfindungsgemäße Lenkungsvorrichtung eines Flurförderzeugs mit einem Lenkrad 1, das direkt auf ein hydraulisches Lenkventil 2 aufgesetzt ist. Eine Drehbewegung des Lenkrads 1 wird auf das Lenkventil 2 über eine kurze Lenkwelle 3 übertragen. Das Lenkventil 2 ist an einer Anschlußplatte 4 befestigt, wobei von dem Lenkventil 2 ausgehende hydraulische Leitungen 5 über die Anschlußplatte 4 nach außen geführt sind. Die Anschlußplatte ist weiter mit einer Parallelogrammführung 6 verbunden, welche am anderen Ende an einem als Rohr ausgeführten Verbindungselement 7 befestigt ist. Das Verbindungselement 7 wiederum ist an einer vertikalen Säule 8 befestigt, wobei das Verbindungselement 7 relativ zur Säule 8 um deren Hochachse 9 drehbar und gegebenenfalls arretierbar ist. Im vorliegenden Ausführungsbeispiel kann die Säule 8 gegenüber einem Rahmen des Flurförderzeugs ebenfalls um die Hochachse 9 gedreht werden.

Innerhalb der Parallelogrammführung ist eine Gasfeder 35 angeordnet, die der Gewichtskraft des Lenkventils 2 und der damit verbundenen Bauteile entgegenwirkt. Die Kraft der Gasfeder wird hierbei im wesentlichen so eingestellt, daß deren senkrechte Kraftkomponente der Gewichtskraft G entspricht. Zur Höhenverstellung des Lenkrads ist daher nur eine geringe Kraft erforderlich.

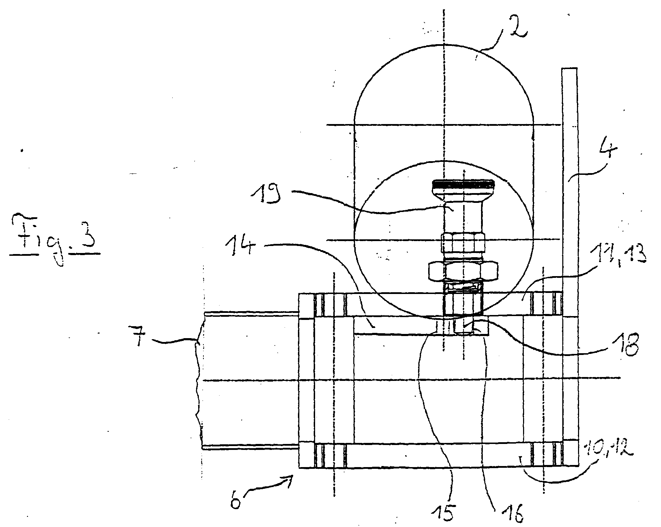

In Figur 2 ist die Parallelogrammführung 6 in der Ansicht gemäß Fig. 1 vergrößert dargestellt. Die Parallelogrammführung 6 weist zwei obere Schenkel 10, 11 und zwei untere Schenkel 12, 13 auf, wobei jeweils zwei Schenkel einander verdecken. Die Parallelogrammführung 6 ist in ihrer Mittelstellung dargestellt. Ausgehend von dieser Mittelstellung kann die Anschlußplatte 4 mit dem in dieser Abbildung nicht dargestellten Lenkrad nach oben oder nach unten bewegt werden. Die Anordnung der Schenkel 10, 11, 12, 13 in der oberen und der unteren Endstellung ist mit strichpunktierten Linien verdeutlicht.

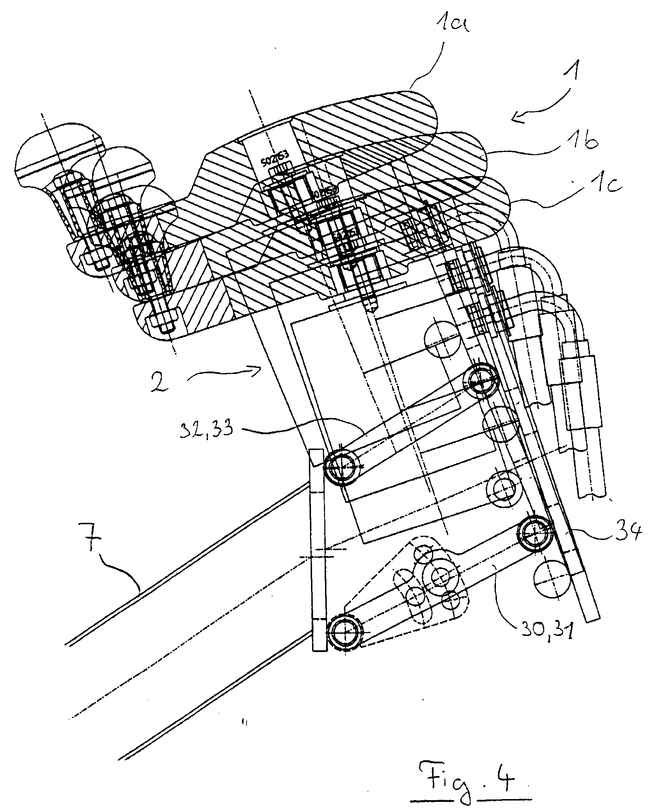

An dem gemäß Figur 2 unteren, hinteren Schenkel 13 befindet sich ein Anschlag für die Parallelogrammführung 6 sowie eine Arretiervorrichtung. Hierzu ist eine nicht verschwenkbare Platte 14 vorgesehen, die ein Langloch 15 sowie drei Rastbohrungen 16 aufweist. In dem Langloch 15 gleitet ein an dem Schenkel 13 angeordneter Stift 17, wodurch ein Anschlag für die Bewegung der Parallelogrammführung 6 gebildet ist. In den Rastbohrungen 16 ist ein an dem Schenkel 13 federnd angebrachter Stift 18 einrastbar, dessen Anordnung in Figur 3 deutlich wird.

Figur 3 zeigt die Parallelogrammführung 6 gemäß Fig. 1 und 2 in Draufsicht. Der Stift 18 rastet automatisch in die entsprechende Bohrung 16 des Schenkels 13 ein, wenn sich die Parallelogrammführung 6 in Mittelstellung oder in der oberen oder unteren Endstellung befindet. Um diese Arretierung der Parallelogrammführung 6 zu lösen, kann der Stift 18 an dem Griff 19 aus der Bohrung 16 herausgezogen werden.

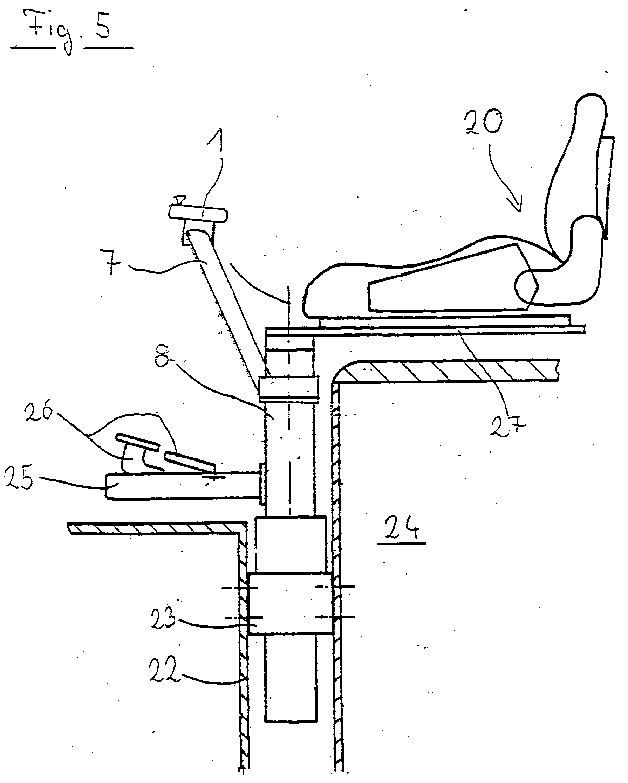

Figur 4 zeigt eine Befestigungsvorrichtung mit in vertikaler Richtung beabstandeten Hebeln 30, 31, 32, 33, wobei die unteren Hebel 30, 31 länger sind, als die oberen Hebel 32, 33. Mit der in der Zeichnung linken Seite sind die Hebel 30-33 an dem Verbindungselement 7 befestigt. Am in der Zeichnung rechten Ende der Hebel 30-33 ist eine Anschlußplatte 34 befestigt. Das Lenkrad 1 ist über das Lenkventil 2 an der Anschlußplatte 34 befestigt. Infolge der unterschiedlichen Länge der Hebel 30, 31 und 32, 33 verändert sich bei einer Höhenverstellung des Lenkrads 1 auch dessen Neigung. Zur Verdeutlichung dieser Neigungsverstellung sind die drei möglichen Positionen 1a, 1b, 1c, in denen das Lenkrad 1 arretierbar ist, abgebildet.

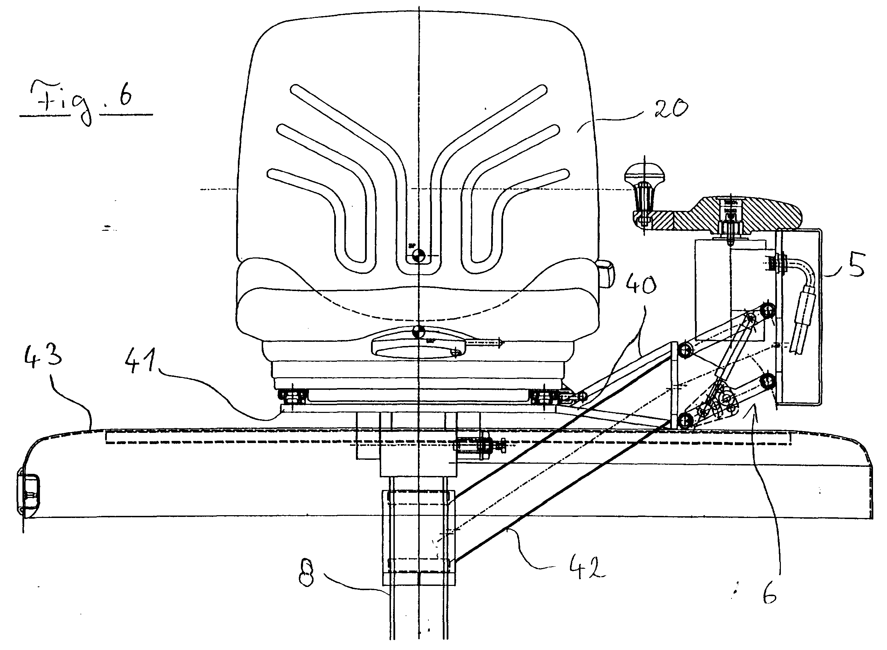

Figur 5 zeigt eine Anordnung der Lenkungsvorrichtung in Verbindung mit einem schwenkbaren Fahrersitz. Der Fahrersitz 20 ist bei dieser Anordnung an einer Säule 8 befestigt, die in einem Rahmen 22 des Flurförderzeugs an einer Lagerstelle 23 drehbar gelagert ist. Die Säule 8 befindet sich vor einem Heckblockkasten 24 des Flurförderzeugs, in welchem beispielsweise ein Batterieblock oder ein verbrennungsmotorisches Antriebsaggregat angeordnet sein kann.

Oberhalb der Lagerstelle ist an der Säule eine Fußplatte 25 befestigt, an der in diesem Ausführungsbeispiel Fußpedale 26 zur Steuerung der Fahrbewegung des Flurförderzeugs angeordnet sind. Am oberen Ende der Säule 8 ist auf einer sich nach hinten über den Heckblockkasten 24 erstreckenden Befestigungsplatte 27 der Fahrersitz 20 befestigt.

Zwischen der Fußplatte 25 und dem Befestigungselement ist an der Säule 8 das rohrförmige Verbindungselement 7 befestigt, an dessen oberem Ende das Lenkrad 1 angeordnet ist. Das Verbindungselement 7 kann hierbei relativ zur Säule 8 gedreht werden. Mit einer nicht dargestellten Klemmschraube ist es möglich, das Verbindungselement 7 drehfest mit der Säule 8 zu verbinden.

Wenn das Verbindungselement 7 als Rohr ausgeführt ist, können elektrische und hydraulische Leitung durch das Innere des Rohrs und das Innere der Säule 8 in den Bereich des Rahmens 22 des Flurförderzeugs geführt werden. Die Anordnung gemäß Fig. 4 kann darüber hinaus mit einer Parallelogrammführung gemäß Fig. 1, 2 und 3 kombiniert werden.

Figur 6 zeigt ein erfindungsgemäßes Flurförderzeug, bei welchem die Lenkvorrichtung über eine Parallelogrammführung 6 und ein Verbindungsstück 40 an einer Sitzplatte 41 des Fahrersitzes 20 befestigt ist. Die Lenkvorrichtung 6 ist somit gemeinsam mit dem Fahrersitz 20 um eine Säule 8 drehbar. Die von dem Lenkventil ausgehenden hydraulischen Leitungen 5 werden zwischen der Parallelogrammführung 6 und der Säule 8 in einen flexiblen Schlauch 42 geführt. Bei einem Schwenken der Lenkvorrichtung wird der Schlauch 42 mit den darin befindlichen hydraulischen Leitungen verformt, wenn er beispielsweise an einen Batteriekasten 43 anstößt. Der maximale Schwenkwinkel der Lenkvorrichtung wird hierbei gegenüber einer Lösung mit starrer Umhüllung der Hydraulikleitungen (siehe Fig. 5) vergrößert.

## Patentansprüche

1. Flurförderzeug mit einer Lenkvorrichtung, wobei ein Lenkrad (1) mittels einer bewegbaren Befestigungsvorrichtung höhenverstellbar angeordnet ist, **dadurch gekennzeichnet**, daß die Befestigungsvorrichtung derart ausgeführt ist, daß ein Neigungswinkel des Lenkrads (1) relativ zur Waagrechten während eines Höhenverstellens des Lenkrads (1) zumindest annähernd unverändert bleibt.

2. Flurförderzeug nach Anspruch 1, dadurch gekennzeichnet, daß die Befestigungsvorrichtung eine Parallelogrammführung (6) oder eine Linearführung aufweist.

3. Flurförderzeug nach Anspruch 1 oder 2, dadurch gekennzeichnet, daß die Befestigungsvorrichtung ein Mittel zum Arretieren der Höheneinstellung des Lenkrads (1) aufweist.

4. Flurförderzeug nach einem der Ansprüche 1 bis 3, dadurch gekennzeichnet, daß ein hydraulisches Lenkventil (2) vorgesehen ist, das gemeinsam mit dem Lenkrad (1) an der Befestigungsvorrichtung höhenverstellbar angeordnet ist.

5. Flurförderzeuge nach einem der Ansprüche 1 bis 4, dadurch gekennzeichnet, daß im Bereich der Parallelogrammführung oder Linearführung eine Gasfeder angeordnet ist, die der Gewichtskraft des Lenkrads entgegenwirkt.

6. Flurförderzeug nach einem der Ansprüche 1 bis 5, dadurch gekennzeichnet, daß die Befestigungsvorrichtung eine im wesentlichen vertikal angeordnete Säule (8) aufweist, wobei das Lenkrad (1) schwenkbar um die vertikale Säule (8) angeordnet ist.

7. Flurförderzeug nach Anspruch 6, dadurch gekennzeichnet, daß das Lenkrad (1) gemeinsam mit der Parallelogrammführung oder Linearführung schwenkbar um die vertikale Säule (8) angeordnet ist.

8. Flurförderzeug nach Anspruch 6 oder 7, dadurch gekennzeichnet, daß ein Fahrersitz (20) drehbar um die vertikale Säule (8) angeordnet ist.

9. Flurförderzeuge mit einer Lenkvorrichtung, wobei ein Lenkrad mittels einer bewegbaren Befestigungsvorrichtung höhenverstellbar angeordnet ist, **dadurch gekennzeichnet,** daß die Befestigungsvorrichtung zwei voneinander in vertikaler Richtung beabstandete Hebel (30, 31 - 32, 33) aufweist, die jeweils mit einem Ende an einem nicht höhenbeweglichen Teil der Lenkvorrichtung gelenkig gelagert sind und jeweils an dem anderen Ende ein mit dem Lenkrad (1) verbundenes Bauteil gelenkig befestigt ist, wobei die Hebel (30, 31 - 32, 33) eine unterschiedliche Länge aufweisen.

10. Flurförderzeug nach Anspruch 9, dadurch gekennzeichnet, daß der untere Hebel (30, 31) länger ist, als der obere Hebel (32, 33).

11. Flurförderzeug nach Anspruch 9 oder 10, dadurch gekennzeichnet, daß die Hebel (30-33) parallel zur Körpermittelebene eines Fahrers ausgerichtet sind.

12. Flurförderzeug nach einem der Ansprüche 9 bis 11, dadurch gekennzeichnet, daß die Befestigungsvorrichtung ein Mittel zum Arretieren der Höheneinstellung des Lenkrads (1) aufweist.

13. Flurförderzeug nach einem der Ansprüche 9 bis 12, dadurch gekennzeichnet, daß ein hydraulisches Lenkventil (2) vorgesehen ist, das gemeinsam mit dem Lenkrad (1) an der Befestigungsvorrichtung höhenverstellbar angeordnet ist.

14. Flurförderzeuge nach einem der Ansprüche 9 bis 13, dadurch gekennzeichnet, daß im Bereich der Hebel (30-33) eine Gasfeder angeordnet ist, die der Gewichtskraft des Lenkrads entgegenwirkt.

15. Flurförderzeug nach einem der Ansprüche 9 bis 14, dadurch gekennzeichnet, daß die Befestigungsvorrichtung eine im wesentlichen vertikal angeordnete Säule (8) aufweist, wobei das Lenkrad (1) schwenkbar um die vertikale Säule (8) angeordnet ist.

16. Flurförderzeug nach Anspruch 15, dadurch gekennzeichnet, daß das Lenkrad (1) gemeinsam mit den Hebeln (30-33) schwenkbar um die vertikale Säule (8) angeordnet ist.

17. Flurförderzeug nach Anspruch 15 oder 16, dadurch gekennzeichnet, daß ein Fahrersitz (20) drehbar um die vertikale Säule (8) angeordnet ist.

18. Flurförderzeug mit einer Lenkvorrichtung und einem an einer drehbaren, im wesentlichen vertikalen Säule (8) befestigten Fahrersitz (20), **dadurch gekennzeichnet**, daß das Lenkrad (1) mittels eines Verbindungselements (7) an der vertikalen Säule (8) befestigt ist, wobei die Lenkvorrichtung um die vertikale Säule (8) drehbar ist.

19. Flurförderzeug nach Anspruch 18, dadurch gekennzeichnet, daß das Lenkrad (1) unabhängig von dem Fahrersitz um die vertikale Säule (8) drehbar ist.

20. Flurförderzeug nach Anspruch 18 oder 19, dadurch gekennzeichnet, daß das Lenkrad (1), bezüglich der Drehbarkeit um die vertikale Säule (8), relativ zu dem Fahrersitz (20) drehfest arretierbar ist.

21. Flurförderzeug nach einem der Ansprüche 18 bis 20, dadurch gekennzeichnet daß das Verbindungselement (7) mindestens ein Rohr aufweist.

22. Flurförderzeug nach Anspruch 21, dadurch gekennzeichnet, daß in dem Rohr hydraulische und/oder elektrische Leitungen der Lenkvorrichtung angeordnet sind.

23. Flurförderzeug mit einer Lenkvorrichtung und einem um eine im wesentlichen vertikale Achse drehbaren Fahrersitz (20), **dadurch gekennzeichnet,** daß die Lenkvorrichtung direkt oder indirekt mit dem Fahrersitz (20) verbunden ist und daß zur Aufnahme von hydraulischen und/oder elektrischen Leitungen (5) der Lenkvorrichtung ein flexibler Schlauch (42) vorgesehen ist.

24. Flurförderzeug nach Anspruch 23, dadurch gekennzeichnet, daß die Lenkvorrichtung direkt oder indirekt an einer Sitzplatte (41) des Fahrersitzes (20) befestigt ist.

25. Flurförderzeug nach Anspruch 23 oder 24, dadurch gekennzeichnet, daß der Fahrersitz (20) an einer drehbaren, im wesentlichen vertikalen Säule (8) befestigt ist.

26. Flurförderzeug nach Anspruch 25, dadurch gekennzeichnet, daß der flexible Schlauch (41) die Lenkvorrichtung mit der Säule (8) verbindet.
